# FASCICULE DE BREVET EUROPEEN

(11) **EP 3 313 594 B1**
(45) Date de publication et mention de la délivrance du brevet: **11.08.2021**
(21) Numéro de dépôt: 16748324.7
(22) Date de dépôt: 27.06.2016
(51) Int. Cl.: B22C 9/10, F01D 5/18

(54) **ENSEMBLE DE MOULAGE D'UNE AUBE DE TURBOMACHINE, COMPRENANT UNE PORTION EN RELIEF DE GRANDE SECTION**
EINHEIT ZUM FORMEN EINER TURBOMASCHINENSCHAUFEL MIT EINEM ERHÖHTEN ABSCHNITT MIT GROSSEM QUERSCHNITT
UNIT FOR MOULDING A TURBOMACHINE BLADE, COMPRISING A RAISED PORTION WITH A LARGE CROSS-SECTION

(30) Priorité: 29.06.2015 FR 1556069
(43) Date de publication de la demande: 02.05.2018
(73) Titulaire: Safran Aircraft Engines, 75015 Paris (FR)
(72) Inventeur: VOLLEBREGT, Matthieu, Jean Luc, 77550 Moissy Cramayel (FR); DUJOL, Charlotte, Marie, 77550 Moissy Cramayel (FR); ENEAU, Patrice, 77550 Moissy Cramayel (FR); GUERARD, Coralie, 77550 Moissy Cramayel (FR); HUCHIN, Patrick, Emilien, Paul, Emile, 77550 Moissy Cramayel (FR)
(74) Mandataire: Brevalex
(86) Numéro de dépôt international: PCT/FR2016/051581
(87) Numéro de publication internationale: WO 2017/001752

(56) Documents cités:
- WO-A2-2015/020720
- FR-A1- 2 977 510

## Description

### DOMAINE TECHNIQUE

L'invention concerne la fabrication d'une aube de moteur de type turbomachine pour aéronef tel qu'un turboréacteur ou un turbopropulseur.

### ÉTAT DE LA TECHNIQUE ANTÉRIEURE

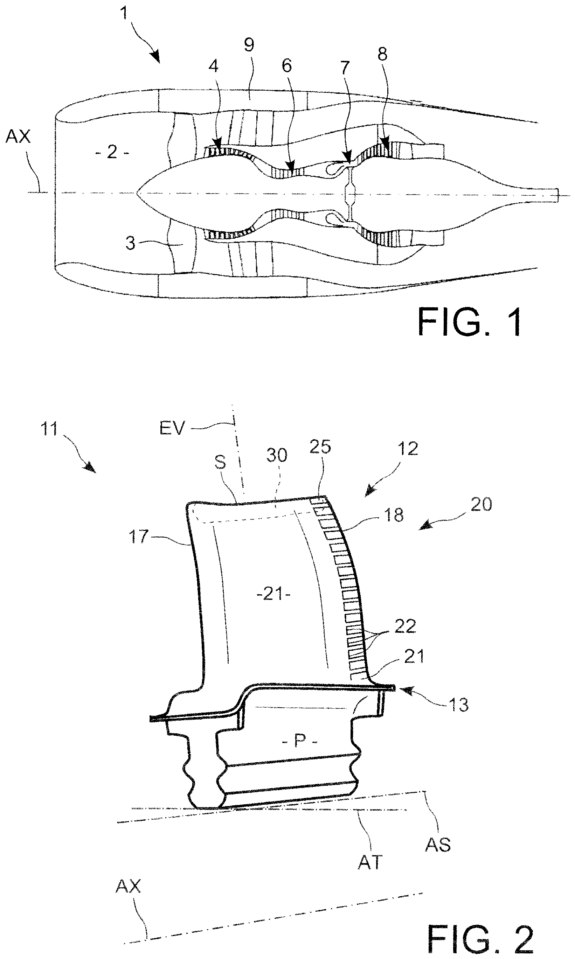

Comme visible sur la figure 1, une partie avant d'un turboréacteur à double flux 1 comporte une manche d'entrée 2 dans laquelle est admis l'air avant d'être aspiré par les pales d'une soufflante 3. Après avoir passé la région de la soufflante, l'air se divise en un flux primaire central et un flux secondaire qui entoure le flux primaire.

Le flux primaire est compressé par des compresseurs 4 et 6 avant d'atteindre une chambre de combustion 7, après quoi il se détend en traversant des turbines 8, avant d'être évacué en générant une poussée. Le flux secondaire est quant à lui propulsé directement par la soufflante pour générer une poussée complémentaire.

Les compresseurs 4, 6 et la turbine 8 comportent des aubes orientées radialement et régulièrement espacées autour d'un arbre de rotation du moteur d'axe AX, un carter externe 9 entourant l'ensemble du moteur.

Le refroidissement des aubes est assuré en faisant circuler dans chaque aube de l'air prélevé en amont de la combustion et admis en pied d'aube, cet air étant évacué par des perçages traversant les parois de ces aubes.

Une telle aube, qui est repérée par 11 sur la figure 2, comprend un pied P par lequel elle est fixée à un corps rotatif, et une pale 12 portée par ce pied P, le pied et la pale étant séparés par une plateforme 13.

La pale 12 a une forme gauche vrillée autour d'un axe EV dit axe d'envergure. L'axe d'envergue EV est généralement perpendiculaire à l'axe de rotation AX. L'axe d'envergue EV est perpendiculaire à un axe AS selon la direction du squelette de l'aube 11. La direction du squelette de l'aube 11 ou direction longitudinale AS de l'aube correspond classiquement à la courbe médiane de l'aube 11 depuis le bord d'attaque 17 au bord de fuite 18 situé en aval du bord d'attaque 17.

L'aube 11 comprend une base par laquelle elle est raccordée à la plateforme 13 et qui se prolonge selon la direction d'envergure EV jusqu'à un sommet S qui est l'extrémité libre de cette pale. Les deux parois principales de la pale sont sa paroi d'intrados 14 et sa paroi d'extrados, non visible sur la figure 2, qui sont espacées transversalement l'une de l'autre, dans la partie courante de l'aube, selon une direction transversale AT orthogonale à la direction d'envergure EV et à la direction longitudinale AS. Les parois d'intrados 14 et la paroi d'extrados se réunissent au niveau du bord de fuite 18.

Le sommet S de l'aube 11 comporte une paroi de fermeture transversale qui raccorde les parois d'intrados et d'extrados. Cette paroi de fermeture non visible sur la figure 2 est en retrait vers l'axe AX par rapport aux bords libre des parois d'intrados et d'extrados. Elle délimite conjointement avec ces bords une portion creuse ouverte en direction opposée à l'axe AX, appelée baignoire 30 représentée en traits discontinus sur la figure 2 et qui est située dans la région du sommet S de l'aube.

Le bord d'attaque 17 est bombé et le bord de fuite 18 a, quant à lui, une forme effilée. Il comporte une série de fentes de refroidissement 20. Ces fentes 20 sont des fentes de faibles longueurs et sont disposées le long de la direction d'envergure EV entre une première fente 21, agencée à proximité de la plateforme 13, et une dernière fente 25, agencé à proximité du sommet S. Les fentes situées entre la première fente 21 et la dernière fente 25 sont appelées fentes intermédiaires 22 dans la suite de l'exposé. Les fentes 20 sont espacées les unes des autres en étant situées dans le prolongement les unes des autres à faible distance du bord de fuite 18.

Chaque fente 20 traverse la paroi de l'aube pour faire circuler de l'air de refroidissement depuis l'intérieur de cette aube 11 et le souffler sur la paroi d'intrados 14 au niveau du bord de fuite 18. Complémentairement, le bord de fuite 18 est pourvu de nervures externes orientées parallèlement à l'axe AS pour canaliser l'air de refroidissement issu de ces fentes.

Conventionnellement, l'air s'écoule d'amont en aval par rapport à l'aube, c'est-à-dire du bord d'attaque vers le bord de fuite de la pale de l'aube. Les termes « amont » et « aval » repris par la suite s'entendent également pour les parties de noyaux de moulage destinées à réaliser la pièce en fonderie

Une telle aube 11 est fabriquée par moulage d'un matériau métallique, en utilisant un ou plusieurs noyaux pour délimiter son espace interne, la baignoire et différentes parties de cette aube ayant des formes complexes. Les documents FR 2 977 510 A1 et WO 2015/020720 A2 décrivent des ensembles de noyaux de l'art antérieur.

De manière générale, il apparaît que la tenue mécanique de l'ensemble de moulage n'est pas satisfaisante.

L'invention est basée sur le constat que la région de l'ensemble de moulage comprenant des barrettes destinées à former les fentes de refroidissement de l'aube constitue une zone de fragilité de l'ensemble de moulage.

L'invention vise à résoudre au moins partiellement les problèmes rencontrés dans les solutions de l'art antérieur.

### EXPOSÉ DE L'INVENTION

A cet égard, l'invention a pour objet un ensemble de moulage pour la fabrication d'un brut d'aube de turbomachine,
le brut d'aube comprenant une pale s'étendant selon une direction dite d'envergure, la pale s'étendant selon une direction longitudinale depuis un bord d'attaque jusqu'à un bord de fuite,
la pale comprenant une paroi latérale d'intrados et une paroi latérale d'extrados espacées dans la partie courante de l'aube selon une direction transversale et reliant chacune le bord d'attaque au bord de fuite,
au moins une des parois latérales étant traversée au niveau du bord de fuite par des fentes de refroidissement espacées les unes des autres dans la direction d'envergure,
la pale comportant un sommet comprenant une cavité en forme de baignoire,
la baignoire comprenant une ouverture aval traversant au moins une des parois latérales jusqu'au bord de fuite,
l'ensemble de moulage comportant une partie amont, une partie aval et une portion en relief solidarisant rigidement la partie amont à la partie aval, la portion en relief étant configurée avec une excroissance de renfort s'étendant au moins selon la direction transversale pour former l'ouverture aval, une fois l'aube réalisée.

L'ensemble de moulage présente une résistance mécanique satisfaisante, tout en permettant une répartition convenable du flux d'air entre les fentes de refroidissement. En particulier, l'ensemble de moulage permet une meilleure répartition du flux d'air de refroidissement par rapport à un ensemble de moulage avec aire agrandie en section transversale d'au moins une barrette pour former une fente de refroidissement.

Avantageusement, la partie aval est rigidement solidarisée à la partie amont par des barrettes et par la portion en relief,
les barrettes étant orientées selon la direction longitudinale et espacées les unes des autres selon la direction d'envergure pour former par moulage les fentes de refroidissement,
la portion en relief étant configurée pour former l'ouverture aval, et présentant une aire en section transversale qui est supérieure à une aire en section transversale d'au moins une des barrettes.

L'invention concerne également un ensemble de moulage tel que défini ci-dessus dans lequel la portion en relief présente une épaisseur, selon une direction transversale de l'ensemble de moulage, qui est supérieure à une épaisseur d'au moins une des barrettes, selon la direction transversale de l'ensemble de moulage.

L'invention concerne également un ensemble de moulage tel que défini ci-dessus dans lequel la portion en relief présente une hauteur, selon une direction d'envergure de l'ensemble de moulage, qui est supérieure à une hauteur d'au moins une des barrettes, selon la direction d'envergure de l'ensemble de moulage.

L'invention concerne également un ensemble de moulage tel que défini ci-dessus comprenant une barrette supérieure configurée pour former la fente de refroidissement la plus proche du sommet, la portion en relief présentant une épaisseur supérieure à l'épaisseur de la barrette supérieure et/ou la portion en relief présentant une hauteur supérieure à la hauteur de la barrette supérieure.

L'invention concerne également un ensemble de moulage tel que défini ci-dessus dans lequel la portion en relief présente une aire en section transversale supérieure à l'aire en section transversale de toutes les barrettes, à l'exception éventuelle de celle de la barrette inférieure.

L'invention concerne également un ensemble de moulage tel que défini ci-dessus dans lequel la région d'épaisseur maximale de la première portion est décalée selon la direction longitudinale par rapport à au moins une des barrettes. Dans cette configuration, les efforts en torsion autour de la direction d'envergure exercés sur les barrettes sont susceptibles d'être encore réduits.

L'invention concerne également un ensemble de moulage tel que défini ci-dessus dans lequel la portion en relief est située au-dessus de la barrette supérieure selon la direction d'envergure, en étant espacée des barrettes.

L'invention concerne également un ensemble de moulage tel que défini ci-dessus dans lequel l'une parmi la partie amont et parmi la partie aval est monobloc.

L'invention concerne également un procédé de fabrication d'une aube de turbomachine, comprenant une étape de fabrication par fonderie d'un brut d'aube dans un ensemble de moulage tel que défini ci-dessus.

L'invention concerne également une aube de turbomachine susceptible d'être fabriquée selon un procédé tel que défini ci-dessus,
l'aube comprenant une plateforme, un sommet et une pale s'étendant dans une direction d'envergure de l'aube depuis la plateforme jusqu'au sommet, la pale s'étendant selon une direction longitudinale de l'aube depuis un bord d'attaque jusqu'à un bord de fuite, la pale comprenant une paroi latérale d'intrados et une paroi latérale d'extrados espacées dans une direction transversale de l'aube et reliant chacune le bord d'attaque au bord de fuite,
au moins une des parois latérales étant traversée au niveau du bord de fuite par une pluralité de fentes de refroidissement espacées les unes des autres dans la direction d'envergure,
caractérisée en ce que la fente de refroidissement la plus proche du sommet présente une aire en section transversale qui est inférieure à une aire en section transversale d'au moins une des fentes de refroidissement.

### BRÈVE DESCRIPTION DES DESSINS

La présente invention sera mieux comprise à la lecture de la description d'exemples de réalisation en référence aux dessins :
- La figure 1 est une vue schématique d'un turboréacteur à double flux en coupe longitudinale ;
- la figure 2 est une vue schématique en perspective d'une aube de turbine du turboréacteur ;
- la figure 3 représente schématiquement un ensemble de noyaux pour mouler une aube ;
- la figure 4 est une vue schématique partielle représentant un ensemble de moulage selon l'invention ;
- la figure 5 est une vue partielle d'un détail de l'ensemble de moulage selon l'invention ;
- la figure 6 est une représentation schématique partielle d'une ébauche d'aube, obtenue par moulage conformément à l'invention ;
- la figure 7 est une représentation schématique d'un type d'aube de turbomachine préférentiellement fabriquée à l'aide de l'ensemble de moulage selon l'invention.

### EXPOSÉ DÉTAILLÉ DE MODES DE RÉALISATION PARTICULIERS

Dans la description qui suit, les termes « inférieur » et « supérieur » s'entendent suivant la disposition des dessins. Sauf précision contraire, les termes inférieur et supérieur sont utilisés en référence à direction de l'axe de rotation AX de sorte que la partie inférieure d'un élément est plus proche de l'axe de rotation AX que la partie supérieure du même élément.

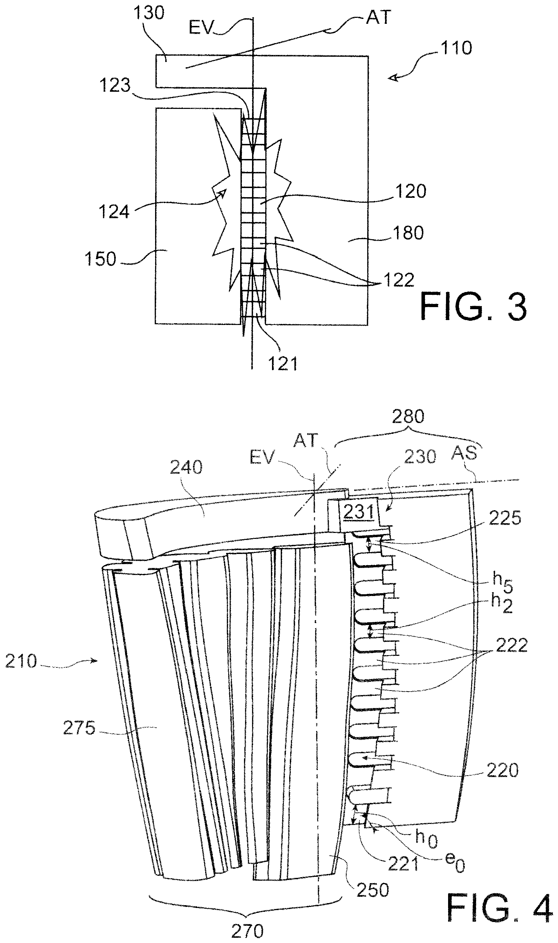

Un ensemble de noyaux 110 est représenté à la figure 3. Il comprend un noyau de baignoire 130, un noyau de rampe aval 150 et un noyau de bord de fuite 180. La baignoire est moulée à l'aide du noyau de baignoire 130. Le noyau de rampe aval 150 est configuré pour former une cavité interne de bord de fuite destinée à alimenter en air de refroidissement les fentes 20. Le noyau de bord de fuite 180 sert à fabriquer le bord de fuite 18 et les fentes de refroidissement 20.

Le noyau de bord de fuite 180 est rigidement solidarisé au noyau de rampe aval 150 par des barrettes 120 conçues pour délimiter les fentes de refroidissement 20.

Les formes qui sont en relief sur les figures permettent de réaliser les formes creuses d'un brut d'aube et vice versa. Un tel brut d'aube est obtenu par fonderie avec l'ensemble de moulage.

De manière générale, la direction d'envergure EV de l'ensemble de moulage correspond à la direction d'envergure EV du brut d'aube, ainsi qu'à la direction d'envergure EV de l'aube. De même, la direction longitudinale AS de l'ensemble de moulage et la direction transversale AT de l'ensemble de moulage correspondent à celles du brut d'aube et de l'aube 11.

En particulier, la direction longitudinale AS correspond à la courbe médiane s'étendant du bord d'attaque au bord de fuite. Elle est différente d'une droite du fait de la forme vrillée de l'aube 11 autour de sa direction d'envergure EV. La direction transversale AT est localement orthogonale à ces deux dernières directions EV, AS.

Les barrettes 120 comprennent une barrette inférieure 121, agencée à l'opposé du noyau de baignoire 130, une barrette supérieure 123, agencée à proximité du noyau de baignoire 130, et des barrettes intermédiaires 122 espacées les unes des autres le long de la direction d'envergure EV entre la barrette inférieure 121 et la barrette supérieure 123. La barrette inférieure 121 sert à former la première fente 21, la barrette supérieure 123 à former la dernière fente 25, et les barrettes intermédiaires 122 à former les autres fentes 22 de refroidissement.

L'invention est basée sur le constat selon lequel les barrettes 120 constituent une région de faiblesse mécanique de l'ensemble de noyaux 110 lorsqu'il est assemblé. En effet, la plupart des barrettes 120 présentent une faible hauteur h₂ selon l'axe EV et une faible épaisseur selon la direction transversale AT. De ce fait, l'ensemble de noyaux 110 présente une faible résistance mécanique dans la région de liaison 124 reliant le noyau rampe aval 150 au noyau de bord de fuite 180.

Selon l'invention, la rigidité de l'ensemble de moulage est renforcée en aval de la partie de noyau formant la baignoire.

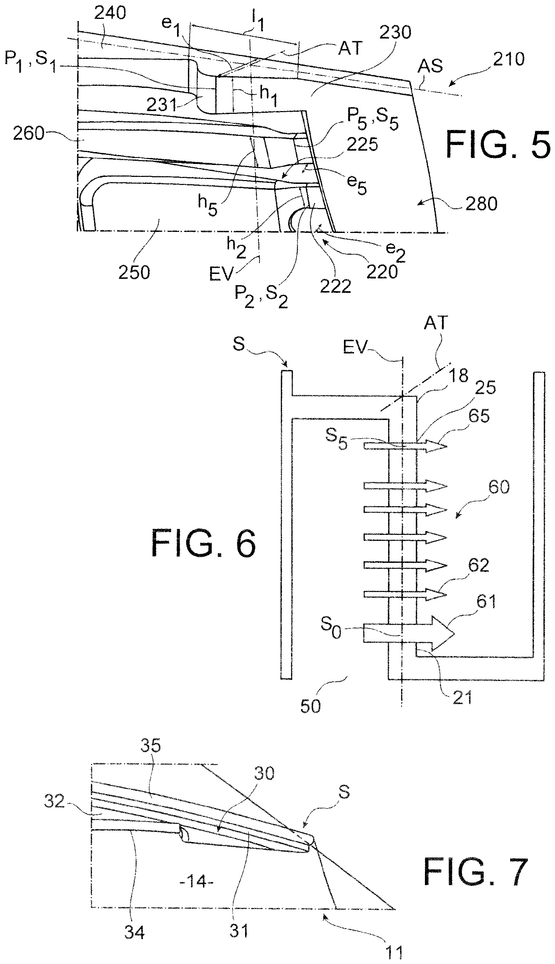

En référence aux figures 4 et 5, l'ensemble de moulage 210 comporte un noyau comportant une partie amont 270 et une partie aval 280 rigidement solidaire de la partie amont. La partie amont 270 constitue une première partie de l'ensemble de moulage 210, la partie aval 280 constituant une deuxième partie du même ensemble.

L'ensemble de moulage 210 comporte une partie supérieure 230 reliant mécaniquement de manière rigide la partie amont 270 à la partie aval 280.

La partie supérieure 230 comprend une portion en relief 231 configurée pour former par moulage l'ouverture aval 31 de la baignoire 30 représentée à la figure 7. La portion en relief 231 est située au-dessus des barrettes 220 selon la direction d'envergure, en étant espacée des barrettes 220.

La portion en relief 231 a une forme générale de bulbe avec une excroissance de renfort de l'ensemble de moulage au moins selon la direction transversale AT. La portion en relief 231 a une face supérieure et une face inférieure espacées l'une de l'autre selon la direction d'envergure EV, les deux faces s'étendant sensiblement suivant le plan formé par les directions AS et AT de manière sensiblement plane.

Les barrettes 220 font partie de la partie aval 280 de l'ensemble de moulage. Les barrettes 220 sont espacées les unes des autres le long de la direction d'envergure EV et orientées selon la direction longitudinale AS.

De manière analogue à ce qui a été décrit à la figure 3, les barrettes 220 sont destinées à former les fentes de refroidissement 20. Les barrettes 220 comprennent une barrette inférieure 221, une barrette supérieure 225 et des barrettes intermédiaires 222 espacées les unes des autres le long de la direction d'envergure EV entre la barrette inférieure 221 et la barrette supérieure 225. La barrette inférieure 221 sert à former la première fente 21, la barrette supérieure 225 à former la dernière fente 25, et les barrettes intermédiaires 222 à former les fentes intermédiaires 22. La dernière fente 25 est la fente de refroidissement du bord de fuite la plus proche du sommet S.

La partie amont 270 comporte une troisième partie 240 et une quatrième partie 250. La troisième partie 240 est située en amont de la partie supérieure 230 selon la direction longitudinale AS, c'est-à-dire vers le bord d'attaque 17, une fois l'aube 11 moulée. Elle est rigidement reliée à la partie supérieure 230 par la portion en relief 231. La partie aval 280 est solidaire de la troisième partie 240 via la partie supérieure 230.

La troisième partie 240 est destinée à former la baignoire 30, située dans la région du sommet S de l'aube 11 au-dessus des fentes de refroidissement 20, à l'exception de l'ouverture aval 31.

La quatrième partie 250 est rigidement solidaire de la partie aval 280 à laquelle est reliée mécaniquement par les barrettes 220. Elle est conçue pour fabriquer une cavité interne de bord de fuite 50, représentée à la figure 6, située à l'intérieur de la pale 12. Cette cavité interne a une forme de rampe aval faisant cheminer l'air de refroidissement le long de la direction d'envergure EV. Elle alimente en air de refroidissement à la fois la première fente 21 et les fentes intermédiaires 22 depuis le pied P de l'aube 11.

L'élément de noyau 260, visible à la figure 5, est conçu pour créer une cavité alimentant de manière distincte en air de refroidissement la dernière fente 25. Cette cavité est également appelée cavité sous baignoire. De ce fait, l'élément de noyau 260 est séparé de la quatrième partie 250 et à distance de celle-ci. L'élément de noyau 260 appartient aussi à la partie amont 270.

Enfin, la partie amont 270 comporte une cinquième partie 275, visible à la figure 4, située en amont de la quatrième partie 250 selon la direction longitudinale AS. Cette cinquième partie du noyau est configurée pour former une rampe amont d'alimentation en air de refroidissement du bord d'attaque 17.

Pour accroître la résistance mécanique de l'ensemble de moulage 210, la portion en relief 231 présente une aire en section transversale Si, visible à la figure 5, qui est significativement supérieure à l'aire en section transversale S₂ de chaque barrette intermédiaire 222.

L'aire maximale S₁ en section transversale de la portion en relief 231 se situe dans un premier plan transversal P₁. Cette aire S₁ est également supérieure à l'aire maximale S₅ en section transversale de la barrette supérieure 225. L'aire S₅ en section transversale de la barrette supérieure 225 se situe dans un plan P₅. Ce plan P₅ est décalé selon la direction longitudinale AS de l'ensemble de moulage vers l'aval par rapport au premier plan P₁.

L'aire maximale S₂ en section transversale des barrettes intermédiaires 222 est sensiblement égale à celle S₅ de la barrette supérieure 225. De plus, le plan P₂ dans lequel se situent les sections S₂ et le plan P₅ sont confondus ou presque.

La portion en relief 231, dans sa partie inférieure, épouse la forme de l'ouverture aval 31. La partie supérieure de la portion en relief 231 est notamment destinée à constituer la partie du brut d'aube située au niveau du sommet de l'aube 11.

De fait, il est possible d'augmenter assez librement la hauteur h₁ de la portion en relief 231, afin d'améliorer la tenue mécanique de l'ensemble de moulage 210. La hauteur h₁ de la portion en relief 231 est supérieure à celle h₅ de la barrette supérieure 225 et celles h₂ des barrettes intermédiaires 222. Les hauteurs h₁, h₂, h₅ sont mesurées le long de la direction d'envergure EV, notamment dans les plans P₁, P₂ et P₅.

La portion en relief 231 présente une première épaisseur e₁ selon la direction transversale AT qui est supérieure à une épaisseur e₂ d'au moins une des barrettes 222. Les épaisseurs e₁ et e₂ sont mesurées selon la direction transversale AT, de préférence au niveau de l'épaisseur maximale de la première portion 231 et des barrettes intermédiaires 222. L'épaisseur e₁ est mesurée dans le plan P₁.

De même, l'épaisseur e₅ de la dernière barrette 225 est sensiblement égale à celle e₂ des barrettes intermédiaires 222. La première épaisseur e₁ est plus grande que celle e₅ de la barrette supérieure 225.

La barrette inférieure 221 présente une hauteur h₀, une épaisseur e₀, et plus généralement une aire S₀ en section transversale, supérieures à celles des barrettes intermédiaires 222 et de la barrette supérieure 225, pour renforcer la tenue mécanique de l'ensemble de moulage 210.

Il en découle, en référence à la figure 6, que le débit d'air 61 circulant à travers la première fente 21 est plus important que le débit d'air 62 au niveau des fentes intermédiaires 22 et que le débit 65 traversant la dernière fente 25. Les débits d'air 62 et 65 traversant les fentes intermédiaires 22 et la dernière fente 25 sont du même ordre de grandeur.

L'aube 11 représentée à la figure 7 comporte une cavité en forme de baignoire 30 dans la région du sommet S. La baignoire 30 est délimitée latéralement par un bord intrados 34 et par un bord extrados 35 qui forment respectivement les extrémités supérieures de la paroi d'intrados 14 et de la paroi d'extrados.

La baignoire 30 comporte un fond 32 qui réunit le bord intrados 34 et le bord extrados 35 selon la direction transversale AT, et qui ferme le sommet S de l'aube selon la direction d'envergure EV. La baignoire 30 comprend une ouverture aval 31 traversant au moins une des parois latérales jusqu'au bord de fuite 18, en particulier la paroi d'intrados 14, comme représenté sur la figure 7.

La portion en relief 231 améliore la tenue mécanique de l'ensemble de moulage 210 et permet de réaliser directement l'ouverture aval 31 qui débouche au niveau du bord de fuite 18 à travers le bord intrados 34 de la baignoire.

De manière générale, il est d'autant plus intéressant que l'épaisseur e₁ de la portion en relief 231 soit importante par rapport à sa hauteur h₁ que l'ensemble de moulage 210 est particulièrement susceptible d'être abîmé par torsion autour d'un axe s'étendant selon la direction d'envergure EV au niveau des barrettes 220. Dans ce cas, la portion en relief améliore d'autant plus significativement la résistance mécanique de l'ensemble de moulage 210.

La portion en relief 231 présente l'avantage d'offrir la possibilité de réduire l'aire en section transversale S₅ de la dernière fente 25, sans compromettre la tenue mécanique de l'ensemble de moulage pour fabriquer le brut d'aube. La répartition globale du débit d'air de refroidissement 60 à travers les fentes 20 peut dès lors être améliorée.

La partie 230 supérieure, la troisième partie 240, la quatrième partie 250 et la cinquième partie 275 sont chacune monoblocs. En variante, chacune de ces parties peut comprendre plusieurs noyaux. Plus généralement, l'ensemble de moulage peut être constitué d'un noyau unique ou d'une pluralité de noyaux fixés les uns aux autres. De tels noyaux sont généralement en céramiques.

De plus, l'aire en section transversale S₁ de la portion en relief est de préférence supérieure à celle S₀ de la barrette inférieure. En variante, elle peut être sensiblement égale ou inférieure, suivant la tenue mécanique générale de l'ensemble de moulage 210.

L'ensemble de moulage 210 peut ne pas comporter d'élément de noyau 260 distinct pour alimenter séparément la dernière fente 25 en air de refroidissement des autres fentes de refroidissement 21, 22. Dans ce cas, la quatrième partie 250 s'étend le long de la direction d'envergure EV de telle sorte à alimenter la dernière fente 25 en air de refroidissement.

Par ailleurs, la troisième partie 240 de noyau représenté à la figure 4 s'étend au-dessus de la quatrième partie 250 et de la cinquième partie 275. En variante, la troisième partie 240, qui sert de noyau pour la baignoire, peut s'étendre seulement dans la partie aval de l'aube selon la direction longitudinale AS.

## Revendications

1. Ensemble de moulage (210) pour la fabrication d'un brut d'aube de turbomachine (11),
le brut d'aube (11) comprenant une pale (12) s'étendant selon une direction dite d'envergure (EV), la pale (12) s'étendant selon une direction longitudinale (AS) depuis un bord d'attaque (17) jusqu'à un bord de fuite (18),
la pale (12) comprenant une paroi latérale d'intrados (14) et une paroi latérale d'extrados espacées dans la partie courante de l'aube (11) selon une direction transversale (AT) et reliant chacune le bord d'attaque (17) au bord de fuite (18),
au moins une des parois latérales (14) étant traversée au niveau du bord de fuite (18) par des fentes de refroidissement (20, 21, 22, 25) espacées les unes des autres dans la direction d'envergure (EV),
la pale comportant un sommet (S) comprenant une cavité en forme de baignoire (30) comprenant une ouverture aval (31) traversant au moins une des parois latérales jusqu'au bord de fuite (18),
l'ensemble de moulage (210) comportant une partie amont (270), une partie aval (280) et une portion en relief (231) solidarisant rigidement la partie amont (270) et la partie aval (280), ladite portion en relief (231) étant configurée avec une excroissance de renfort s'étendant au moins selon la direction transversale (AT) pour former l'ouverture aval (31), une fois l'aube réalisée.

2. Ensemble de moulage (210) selon la revendication précédente, dans lequel la partie aval (280) est rigidement solidarisée à la partie amont (270) par des barrettes (220, 222, 225) et par la portion en relief (231),
les barrettes (220, 222, 225) étant orientées selon la direction longitudinale (AS) et espacées les unes des autres selon la direction d'envergure (EV) pour former par moulage les fentes de refroidissement (20, 21, 22, 25),
la portion en relief (231) étant configurée pour former l'ouverture aval (31), et présentant une aire en section transversale (S₁) qui est supérieure à une aire en section transversale (S₂) d'au moins une des barrettes (222).

3. Ensemble de moulage (210) selon la revendication précédente, dans lequel la portion en relief (231) présente une épaisseur (e₁), selon une direction transversale (AT) de l'ensemble de moulage, qui est supérieure à une épaisseur (e₂) d'au moins une des barrettes (222), selon la direction transversale (AT) de l'ensemble de moulage.

4. Ensemble de moulage (210) selon l'une quelconque des revendications 2 et 3, dans lequel la portion en relief (231) présente une hauteur (h₁), selon une direction d'envergure (EV) de l'ensemble de moulage, qui est supérieure à une hauteur (h₂) d'au moins une des barrettes (222), selon la direction d'envergure (EV) de l'ensemble de moulage.

5. Ensemble de moulage (210) selon l'une quelconque des revendications 2 à 4, comprenant une barrette supérieure (225) configurée pour former la fente de refroidissement (25) la plus proche du sommet (S),
la portion en relief (231) présentant une épaisseur (e₁) supérieure à l'épaisseur (e₅) de la barrette supérieure (225) et/ou
la portion en relief (231) présentant une hauteur (h₁) supérieure à la hauteur (h₅) de la barrette supérieure (225).

6. Ensemble de moulage (210) selon l'une quelconque des revendications 2 à 5, dans lequel la région d'épaisseur maximale (e₁) de la portion en relief (231) est décalée selon la direction longitudinale (AS) par rapport à au moins une des barrettes (222, 225).

7. Ensemble de moulage (210) selon l'une quelconque des revendications 2 à 6, dans lequel la portion en relief (231) est située au-dessus de la barrette supérieure (225) selon la direction d'envergure (EV), en étant espacée des barrettes.

8. Ensemble de moulage (210) selon l'une quelconque des revendications précédentes, dans lequel l'une parmi la partie amont (270) et parmi la partie aval (280) est monobloc.

9. Procédé de fabrication d'une aube de turbomachine (11), comprenant une étape de fonderie d'un brut d'aube (11) mise en œuvre dans un ensemble de moulage (210) selon l'une quelconque des revendications précédentes.

## Patentansprüche

1. Einheit zum Formen (210) für die Herstellung eines Rohlings einer Turbomaschinenschaufel (11),
wobei der Schaufelrohling (11) ein Blatt (12) umfasst, welches sich in einer sogenannten Spannweitenrichtung (EV) erstreckt, wobei sich das Blatt (12) in einer Längsrichtung (AS) von einer Vorderkante (17) zu einer Hinterkante (18) erstreckt,
wobei das Blatt (12) eine untere Seitenwand (14) und eine obere Seitenwand umfasst, welche in dem Strömungsteil des Blattes (11) in einer Querrichtung (AT) voneinander beabstandet sind und jeweils die Vorderkante (17) mit der Hinterkante (18) verbinden,
wobei mindestens eine der Seitenwände (14) auf Höhe der Hinterkante (18) von Kühlschlitzen (20, 21, 22, 25) durchsetzt ist, welche in der Spannweitenrichtung (EV) voneinander beabstandet sind,
wobei das Blatt einen Scheitelpunkt (S) mit einem Hohlraum in Form einer Wanne (30) mit einer stromabwärtigen Öffnung (31) aufweist, welche mindestens eine der Seitenwände bis zur Hinterkante (18) durchsetzt,
wobei die Einheit zum Formen (210) einen stromaufwärtigen Teil (270), einen stromabwärtigen Teil (280) und einen erhöhten Abschnitt (231) aufweist, der den stromaufwärtigen Teil (270) und den stromabwärtigen Teil (280) starr miteinander verbindet, wobei der erhöhte Abschnitt (231) mit einem Verstärkungsvorsprung ausgeführt ist, der zumindest in der Querrichtung (AT) verläuft, um die stromabwärtige Öffnung (31) auszubilden, sobald das Blatt hergestellt ist.

2. Einheit zum Formen (210) nach dem vorhergehenden Anspruch, wobei der stromabwärtige Teil (280) starr mit dem stromaufwärtigen Teil (270) über Stege (220, 222, 225) sowie über den erhöhten Teil (231) verbunden ist,
wobei die Stege (220, 222, 225) in der Längsrichtung (AS) ausgerichtet und in der Spannweitenrichtung (EV) voneinander beabstandet sind, um durch Formen die Kühlschlitze (20, 21, 22, 25) auszubilden,
wobei der erhöhte Abschnitt (231) dazu ausgeführt ist, die stromabwärtige Öffnung (31) auszubilden, und eine Querschnittsfläche (S₁) aufweist, die größer als eine Querschnittsfläche (S₂) von mindestens einem der Stege (222) ist.

3. Einheit zum Formen (210) nach dem vorhergehenden Anspruch, wobei der erhöhte Abschnitt (231) eine Dicke (e₁) in einer Querrichtung (AT) der Einheit zum Formen aufweist, die größer als eine Dicke (e₂) von mindestens einem der Stege (222) in der Querrichtung (AT) der Einheit zum Formen ist.

4. Einheit zum Formen (210) nach einem der Ansprüche 2 und 3, wobei der erhöhte Abschnitt (231) eine Höhe (h₁) in einer Spannweitenrichtung (EV) der Einheit zum Formen aufweist, die größer als eine Höhe (h₂) von mindestens einem der Stege (222) in der Spannweitenrichtung (EV) der Einheit zum Formen ist.

5. Einheit zum Formen (210) nach einem der Ansprüche 2 bis 4, mit einem oberen Steg (225), der zur Ausbildung des Kühlschlitzes (25) ausgeführt ist, welcher dem Scheitelpunkt (S) am nächsten ist,
wobei der erhöhte Abschnitt (231) eine größere Dicke (e₁) als die Dicke (e₅) des oberen Steges (225) aufweist, und/oder
wobei der erhöhte Abschnitt (231) eine größere Höhe (h₁) als die Höhe (h₅) des oberen Steges (225) aufweist.

6. Einheit zum Formen (210) nach einem der Ansprüche 2 bis 5, wobei der Bereich mit maximaler Dicke (e₁) des erhöhten Abschnittes (231) in der Längsrichtung (AS) bezüglich mindestens eines der Stege (222, 225) versetzt ist.

7. Einheit zum Formen (210) nach einem der Ansprüche 2 bis 6, wobei sich der erhöhte Abschnitt (231) oberhalb des oberen Steges (225) in der Spannweitenrichtung (EV) beabstandet von den Stegen befindet.

8. Einheit zum Formen (210) nach einem der vorhergehenden Ansprüche, wobei einer des stromaufwärtigen Teils (270) und des stromabwärtigen Teils (280) aus einem Stück besteht.

9. Herstellungsverfahren einer Turbomaschinenschaufel (11), mit einem Schritt des Gießens eines Schaufelrohlings (11), der in einer Einheit zum Formen (210) nach einem der vorhergehenden Ansprüche durchgeführt wird.

## Claims

1. Moulding unit (210) for producing a turbomachine vane blank (11),
the vane blank (11) comprising a blade (12) extending in a so-called spanwise direction (EV), the blade (12) extending in a longitudinal direction (AS) from a leading edge (17) as far as a trailing edge (18),
the blade (12) comprising a pressure-face side wall (14) and a suction-face side wall spaced apart from each other in the running portion of the vane (11) in a transverse direction (AT) and each connecting the leading edge (17) to the trailing edge (18),
at least one of the side walls (14) being passed through at the level of the trailing edge (18) by cooling slots (20, 21, 22, 25) spaced apart from each other in the spanwise direction (EV),
the blade comprising a tip (S) which includes a cavity in the shape of a basin (30) comprising a downstream opening (31) passing through at least one of the side walls as far as the trailing edge (18),
the moulding unit (210) having an upstream portion (270), a downstream portion (280) and a raised portion (231) rigidly securing the upstream portion (270) to the downstream portion (280), said raised portion (231) being configured with a strengthening protuberance extending at least in the transverse direction (AT) in order to form the downstream opening (31) once the vane has been manufactured.

2. Moulding unit (210) according to the preceding claim, wherein the downstream portion (280) is rigidly secured to the upstream portion (270) by strips (220, 222, 225) and by the raised portion (231),
the strips (220, 222, 225) being oriented in the longitudinal direction (AS) and spaced apart from each other in the spanwise direction (EV) in order to form the cooling slots (20, 21, 22, 25) by moulding,
the raised portion (231) being configured such that it forms the downstream opening (31), and having a cross-sectional area (S₁) that is greater than a cross-sectional area (S₂) of at least one of the strips (222).

3. Moulding unit (210) according to the preceding claim, wherein the raised portion (231) has a thickness (e₁), in a transverse direction (AT) of the moulding unit, that is greater than a thickness (e₂) of at least one of the strips (222), in the transverse direction (AT) of the moulding unit.

4. Moulding unit (210) according to either claim 2 or claim 3, wherein the raised portion (231) has a height (h₁), in a spanwise direction (EV) of the moulding unit, that is greater than a height (h₂) of at least one of the strips (222), in the spanwise direction (EV) of the moulding unit.

5. Moulding unit (210) according to any of claims 2 to 4, comprising an upper strip (225) configured such that it forms the cooling slot (25) the closest to the tip (S),
the raised portion (231) having a thickness (e₁) that is greater than the thickness (e₅) of the upper strip (225) and/or
the raised portion (231) having a height (h₁) that is greater than the height (h₅) of the upper strip (225).

6. Moulding unit (210) according to any of claims 2 to 5, wherein the region of maximum thickness (e₁) of the raised portion (231) is offset in the longitudinal direction (AS) relative to at least one of the strips (222, 225).

7. Moulding unit (210) according to any of claims 2 to 6, wherein the raised portion (231) is situated above the upper strip (225) in the spanwise direction (EV), and is spaced apart from the strips.

8. Moulding unit (210) according to any of the preceding claims, wherein one of either the upstream portion (270) or the downstream portion (280) is made in one piece.

9. Method for manufacturing a turbomachine vane (11), comprising a step of casting a vane blank (11) implemented in a moulding unit (210) according to any of the preceding claims.
